Europäisches Patentamt

European Patent Office

Office européen des brevets

(19)

(11) Veröffentlichungsnummer: **0 345 373 B1**

(12) **EUROPÄISCHE PATENTSCHRIFT**

(45) Veröffentlichungstag der Patentschrift: **12.02.92**

(51) Int. Cl.⁵: **F16B 35/04**

(21) Anmeldenummer: **88109189.6**

(22) Anmeldetag: **09.06.88**

(54) **Schraube.**

(43) Veröffentlichungstag der Anmeldung:
**13.12.89 Patentblatt 89/50**

(45) Bekanntmachung des Hinweises auf die
Patenterteilung:
**12.02.92 Patentblatt 92/07**

(84) Benannte Vertragsstaaten:
**FR GB IT SE**

(56) Entgegenhaltungen:
**DE-A- 2 824 491**
**GB-A- 2 123 510**
**US-A- 2 167 910**

(73) Patentinhaber: **BUELL INDUSTRIES, INC.**
**130 Huntingdon Avenue**
**Waterbury Connecticut 06708(US)**

(72) Erfinder: **Peterson, Francis C**
**89 Plumb Brook rd.**
**Woodbury, Connecticut 06798(US)**

(74) Vertreter: **Mentzel, Norbert, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2(DE)**

## Beschreibung

Die Erfindung betrifft eine Schraube der im Oberbegriff des Anspruches 1 erläuterten Art. Bei diesen bekannten Schrauben tritt manchmal beim Aufschrauben von Muttern oder beim Eindrehen der Schrauben in Gewindelöcher eine Gewindeverkreuzung ein, welche durch die Erfindung vermieden wird. Dies ist auf folgendem Tatbestand zurückzuführen:

Mit Schraubgewinden versehene Befestiger, wie Maschinenschrauben oder Gewindebolzen, werden, wie an sich bekannt, üblicherweise mit Muttern benutzt, oder sie greifen in Bohrungen mit einem entsprechenden Innengewinde ein. Es kommt nun in manchen Fällen vor, daß die Befestiger nicht einwandfrei mit den Aufnahmen in den Muttern oder den Gewindebohrungen ausgerichtet sind, bevor ein Drehmoment zum Einschrauben auf sie ausgeübt wird. Dies führt zu der erwähnten Gewindeverkreuzung der zusammenwirkenden Außen- und Innengewinde zwischen dem Befestiger und ihren Gewindeaufnahmen. Eine solche Gewindeverkreuzung kann sowohl die Gewindegänge des Befestigers als auch der Mutter oder der Gewindebohrung beschädigen, wenn diese Bauteile so falsch ineinandergreifen. Ein falscher Gewindesitz der Teile verhindert ein zuverlässiges Spannen der Befestiger bzw. ihrer Muttern und erzeugt eine unsichere Befestigung. Dies führt zu einem möglichen Risiko der Verletzung der Bedienungsperson oder Beschädigung der ganzen Einrichtung. Hinzu kommt, daß ein gewindemäßig falsch passender Befestiger schwierig zu lösen ist, und die Gewindegänge des Befestigers sowie der Mutter bzw. der Gewindeaufnahme beim Lösen der Teile zerstört werden. Sofern die Gewindeaufnahme in einem metallischen Bauteil eingearbeitet ist, muß üblicherweise die Gewindeaufnahme vor ihrer endgültigen Nutzung nochmals nachgeschnitten werden, was zeit- und kostenaufwendig ist.

Der Erfindung liegt die Aufgabe zugrunde, eine preiswerte Schraube und einen Befestiger mit einem Gewindeschaft zu entwickeln, der die vorerwähnte Gewindeverkreuzung und die damit zusammenhängenden Schwierigkeiten vermeidet. Dies wird erfindungsgemäß durch die im kennzeichnenden Teil des Anspruches 1 angeführten Merkmale erreicht, denen folgende besondere Bedeutung zukommt:

Wenn der Gewindeschaft der erfindungsgemäßen Schraube bzw. eines entsprechenden Befestigers in die Gewindeaufnahme einer Mutter oder einer Bohrung eingesteckt wird, greifen bereits, bevor eine Schraubrotation ausgeübt wird, mehrere Gewindegänge des Innen- und Außengewindes ineinander, so daß das Schraubengewinde bereits in Übereinstimmung mit den aufnehmenden Gewindegängen ist. Hierunter ist zu verstehen, daß das sich zu seinem freien Ende verjüngende Endstück des Gewindeschaftes ohne Schraubrotation bereits in die lichte Aufnahme des Innengewindes einsteckbar ist, bis daß am sich verjüngenden Endstück gebildete Teilgewinde in die Gewindegänge des Innengewindes eingreift. Das Einstecken des Einsteckendes des Gewindeschaftes in die lichte Aufnahme des Innengewindes kann dabei unausgerichtet erfolgen. Bei dem nachfolgenden Einziehen des Gewindeschaftes durch Drehen erfolgt eine Zentrierung, so daß sich der Gewindeschaft glatt in die Mutter bzw. die Gewindebohrung einschraubt.

Dies ist auf das verjüngte und radial versetzte Endstück des Gewindeschaftes nach der Erfindung zurückzuführen, welches nur an einer Seite Teile von Gewindegängen aufweist. Die Mittelachse des kegelstumpfförmigen Endstückes und ihr Achsmittelpunkt ist dabei zu der Längsmittellinie des Gewindeschaftes seitlich, insbesondere parallel versetzt. Jene Bereiche des Kegelstumpfes, die bei diesem Versatz außerhalb des Außendurchmessers des Gewindeschaftes liegen, sind nicht vorhanden und belassen nur ein Bruchstück des Kegelstumpfes. Das Endstück des Gewindeschaftes ist folglich nur an jener in Richtung des Versatzes der Kegelachse weisenden Seite mit einem Teilgewinde versehen.

Die Schraube nach der Erfindung verhindert eine Gewindeverkreuzung beim unausgerichteten Einziehen in ein Innengewinde, weil die gewindefreie, glatte Seite des Endstückes über die Innengewinde der damit zusammenwirkenden Mutter gleiten kann, wenn man die Schraube einfach unausgerichtet einsteckt. Gleichzeitig kommen die auf der gegenüberliegenden Seite befindlichen Teile der Gewindegänge des Endstückes in ordnungsgemäße Wirkposition mit dem Mutterngewinde. Die Schraube ist mit ihrem Einsteckende bereits teilweise im Gewindeeingriff mit der Mutter, so daß bei der späteren relativen Rotation zueinander die Schraube ordnungsgemäß in die Gewindeaufnahme in der Mutter fortschreitet. Die bereits im Einsteckzustand ineinandergefügten Teilgewinde am Endstück wirken als Führungen oder Leitflächen, die von vornherein bereits in Wirkverbindung mit dem Mutterngewinde stehen. Dadurch wird das Gewinde des zylindrischen Schaftes zentriert und richtig in die Mutternaufnahme eingeschraubt, ohne daß eine Gewindeverkreuzung eintreten kann.

Aus der US-A-2 167 910 ist bereits eine Schraube mit einem Kopf und mit einem ein Schraubgewinde aufweisenden Schaft bekannt geworden, wobei der Schaft an seinem dem Kopf abgekehrten Ende einen Ansatz aufweist, der mit einem Gewindegänge aufweisenden, sich nur über einen Teil des Schaftumfangs erstreckenden und zum Schraubgewinde fluchtenden Teilgewinde versehen ist. Dieser am Gewindeschaft vorgesehene Ansatz erstreckt sich nur über einen Teilbereich des Querschnitts des Gewindezapfens und dient zum Ausrichten von zwei nicht genau zueinander fluchtenden Durchbrüchen in plattenförmigen Gegenständen, durch die die Schraube durchgesteckt werden soll. Eine Gewindeverkreuzung beim unausgerichteten Einziehen der Schraube in ein Innengewinde kann durch diese vorbekannte Schraube nicht vermieden werden.

Weitere vorteilhafte Maßnahmen der Erfindung ergeben sich aus den Unteransprüchen und der nachfolgenden Beschreibung. Die Erfindung richtet sich dabei auf alle sich daraus ergebenden neuen Maßnahmen, auch wenn diese in den Ansprüchen nicht ausdrücklich angeführt sind.

In der Zeichnung ist die Erfindung in einem Ausführungsbeispiel dargestellt, und zwar Zeigen:

Fig. 1 eine Seitenansicht der entsprechend der Erfindung gestalteten Schraube,

Fig. 2 einen Axialschnitt durch die Schraube von Fig. 1, wenn diese in eine zugehörige Mutter vor ihrem Schraubeinzug axial eingesteckt worden ist und

Fig. 3 die Endansicht der Schraube und Mutter von Fig. 2.

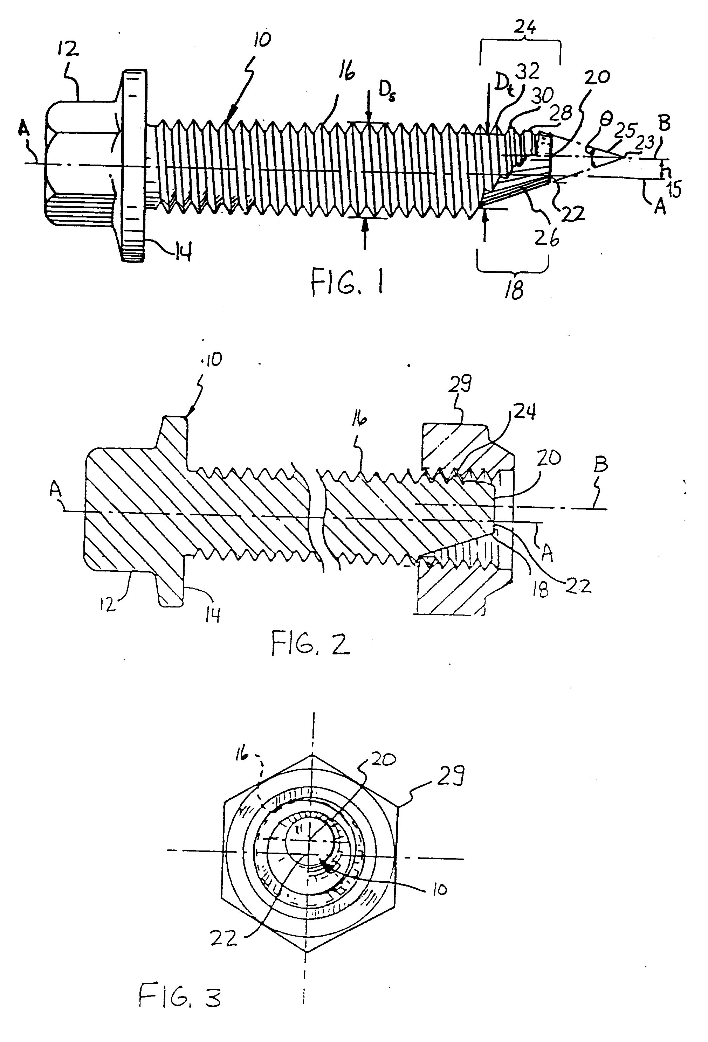

Wie aus Fig. 1 und 2 ersichtlich, umfaßt die erfindungsgemäße Schraube 10 einen Kopf 12, der geeignet ist, um mit einem Werkzeug zur Ausübung des rotativen Drehmoments zusammenzuwirken. Der Kopf 12 kann beispielsweise geschlitzt sein, eine kantige Imbus-Aufnahme besitzen oder, wie dargestellt, in Stirnansicht eine hexagonale Form aufweisen, um parallele ebene Flächen zur Aufnahme eines Mutternschlüssels zu erzeugen. Der Kopf 12 hat eine Lastaufnahmefläche 14, die im allgemeinen senkrecht zur Längsachse A der Schraube 10 sich erstreckt. Ein Gewindeschaft 16 verläuft senkrecht zu der Lastaufnahmefläche 14 und besitzt ein erfindungsgemäß besonders gestaltetes Schaft-Endstück 18.

Das Endstück 18 des Gewindeschafts 16 ist verjüngt und verkröpft. Es besteht aus einem Abschnitt eines bezüglich der Querschnittsebene des Gewindeschafts 16 rechtwinkligen Kegelstumpf 25, dessen gerade Kegelachse B einen Mittelpunkt 20 an seinem Kopfende bestimmt. Der Abschnitt des Kegelstumpfes 25 ergibt sich deswegen, weil, wie aus Fig. 1 zu erkennen ist, jene Teile des vollen Kegelstumpfes im erfindungsgemäßen Endstück 18 wegfallen, die außerhalb des Außendurchmessers Ds des Gewindeschafts 16 zu liegen kommen würden.

Der Mittelpunkt 20 im Kopfkreis ist mit jener Kegelachse B zentriert, die durch den angedeuteten Scheitelpunkt 23 eines imaginären Kegels geht, der den vorerwähnten Abschnitt des Kegelstumpfes zu einem Vollkegel komplettieren würde. Dieser Mittelpunkt 20 ist gegenüber der Längsachse A des Gewindeschafts 16 versetzt, so daß ein Abstand 15 bezüglich einer von der Schaft-Längsachse A bestimmten Schaftmitte 22 entsteht, der zwischen 2 und 45 % des Durchmessers Ds des Gewindeschafts 16 liegt. Das Ausmaß des Versatzes 15 hängt ab vom Scheitelwinkel $\ominus$ des jeweils benutzten Kegels. Diese Auswahl des Versatzes 15 kann von einem Durchschnittsfachmann getroffen werden, der die Zielsetzung beachtet, auf einer Seite des Kegelstumpfes 25 eine Vielzahl von Teilgewinden 24 entstehen zu lassen, welche beim Einstecken der Schraube 10 von selbst in eine zugehörige komplementäre Mutter 29 eingreifen, was aus Fig. 2 zu ersehen und nachfolgend näher beschrieben wird.

Obwohl die vorausgehende Beschreibung auf die Fokussierung eines Abschnitts eines geraden kreisförmigen Kegelstumpfes 25 abgestellt ist, läßt sich das dargestellte Endstück 18 auch alternativ beschreiben, was äquivalent zu der in Fig. 1 und 2 gezeigten Anwendung ist und in den Umfang der Erfindung fällt. Das Endstück 18 könnte aus einem Abschnitt eines schiefen Kreiskegels gebildet sein. Mit anderen Worten gesagt, das Endstück 18 umfaßt den Stumpf der unteren Hälfte eines Konus, der nicht ein rechter Kreiskegel ist und dessen Kegelscheitel nicht auf der Längsachse A des Gewindeschafts 16 liegt.

Bedarfsweise können für das Endstück 18 vergleichbare andere Formen, wie Paraboloide oder Hyperboloide verwendet werden. Diese Alternativformen sollten einen ausreichenden seitlichen Versatz aufweisen, weshalb auch dabei die erwähnten Teilgewinde 24, analog zu Fig. 1, während des Herstellungsvorgangs der Schraube zustande kommen, der wie folgt abläuft:

Die erfindungsgemäße Schraube 10 wird in an sich bekannter Weise hergestellt und umfaßt typischerweise eine erste Arbeitsstufe zur Formgebung eines zunächst noch gewindefreien Schraubenrohlings im Gieß- oder Extrusionsverfahren. In einer zweiten Arbeitsstufe wird das Gewinde über eine Schablone in den Schraubenrohling eingeschnitten. Das Endstück 18 der fertigen Schraube 10 wird beim Gießen oder maschinellen Herstellen eingebracht und bildet ein Teilstück eines abgesetzten Kegelstumpfs. Wegen des seitlichen Versatzes des Kegelstumpfs wird in der Gewindeschneidstufe der Gewindegang lediglich an einer Seite des Kegels eingeschnitten, und zwar an jenen Stellen, die sich jenseits des Kerndurchmessers Dt des Schaftes befinden. Der Kerndurchmesser Dt ist durch den Nutgrund des einzuschneidenden Gewindes bestimmt. Dadurch entsteht im Endstück 18 einerseits das Teilgewinde 24 und andererseits ein gewindefreier Bereich 26,wie Fig. 1 verdeutlicht. Die Geometrie der Schraube verursacht beim Herstellungsprozeß die Ausbildung der Teilgewinde 24 auf jener Seite des Endstücks 18, in welcher der erzeugte Kegelstumpf 25 richtungsmäßig versetzt ist.

Wie erwähnt, kann das Endstück 18 aus einer Vielfalt geometrischer und parabolischer Figuren ausgewählt werden, solange auf einer Seite des so gebildeten Endstücks 18 eine glatte Fläche 26 und auf einer gegenüberliegenden Fläche die Teilgewinde 24 in der Verfahrensstufe des Gewindeeinbringens entstehen. Die Auswahl der Form kann von einem Durchschnittsfachmann besorgt werden. Die Länge eines Gewindegangs bei dem erzeugten Teilgewinde 24, die beim Schneidvorgang entsteht, sollte innerhalb folgender Grenzen jeweils liegen: Der erste entstehende Teilgewindegang, der in Fig. 1 mit 28 bezeichnet ist, und der freien Stirnfläche des Endstücks 18 benachbart ist, sollte sich zwischen 4 und 20 % der Umfangslänge des Gewindeschafts 16 erstrecken. Die Ganglänge des darauffolgenden zweiten Teilgewindegangs 30 sollte zwischen 10 und 40 % der vollen Umfangslänge des Gewindeschafts 16 ausmachen, während schließlich der dritte Teilgewindegang 32 sich über den Bereich von 20 bis 70 % des Umfangs des Gewindeschafts 16 erstrecken sollte.

Die Schraube vermeidet die beschriebene unerwünschte Gewindekreuzung, weil, wie aus Fig. 2 zu ersehen ist, der glatte Bereich 26 am Schaftende über die Innengewinde der gezeigten Mutter 29 gleiten kann, wenn man das Gewindeendstück 18 in die Mutter einsteckt. Dabei werden die Teilgewinde 24 auf der gegenüberliegenden Seite in eine Sitzposition an den Gewindeflanken des Innengewindes der Mutter 29 kommen. Die Schraube greift folglich nur an einer Seite mit ihren Teilgewinden 24 in Phase in das Mutterngewinde ein. Wird nun die Schraube 10 rotiert, um die Schraube 10 und die Mutter 29 anzuziehen, wirken die Teilgewinde 24 als Führungen oder Leitflächen, wodurch der Hauptbestandteil des Gewindeschafts 16 sich leicht und ordnungsgemäß in die Mutter 29 eindreht. Wie ersichtlich, erzeugt der Befestiger nach der Erfindung eine Schraube, welche die eingangs erwähnten Probleme der Gewindeverkreuzung vermeidet.

Bezugszeichenliste:

| A | Längsachse |
| B | Kegelachse |
| Ds | Außendurchmesser |
| Dt | Kerndurchmesser |
| ⊖ | Scheitelwinkel |
| 10 | Schraube |
| 12 | Schraubenkopf |
| 14 | Lastaufnahmefläche |
| 15 | Versatzstrecke |
| 16 | Gewindeschaft |
| 18 | Schaftendstück |
| 20 | Mittelpunkt |
| 22 | Schaftmitte |
| 23 | Scheitelpunkt |
| 24 | Teilgewinde |
| 25 | Kegelstumpf |
| 26 | gewindefreie, glatte Seite |
| 28 | erster Teilgewindegang |
| 29 | Mutter |
| 30 | zweiter Teilgewindegang |
| 32 | dritter Teilgewindegang |

## Patentansprüche

1. Schraube mit einem Kopf und mit einem ein Schraubgewinde aufweisenden Schaft, der an seinem freien Ende ein sich zu seinem freien Ende verjüngendes Endstück mit an seiner einen Seite sich nur über einen Teil des Umfanges erstreckenden und zum Schaftgewinde fluchtenden Teilgewinde aufweist,

   **dadurch gekennzeichnet,**

   daß das sich zu seinem freien Ende verjüngende Endstück (18) des Gewindeschaftes (16) zur Vermeidung einer Gewindeverkreuzung beim unausgerichteten Einziehen in ein Gewindeloch kegelstumpfförmig ausgebildet ist, wobei die Mittelachse (B) des kegelstumpfförmigen Endstückes (18) und ihr Achsmittelpunkt (20) zu der Längsmittellinie (A) des Gewindeschaftes (16) seitlich, insbesondere parallel versetzt ist.

2. Schraube nach Anspruch 1, dadurch gekennzeichnet, daß das Teilgewinde (24) an der in Richtung des Versatzes (15) weisenden Seite des Endstückes (18) angeordnet ist.

3. Schraube nach Anspruch 1 oder 2, dadurch gekennzeichnet, daß die Größe des Versatzes (15) zwischen der Mittelachse (B) des kegelstumpfförmigen Endstückes (18) mit ihrem Achsmittelpunkt (20) und der Längsmittellinie (A) des Gewindeschaftes (16) zwischen zwei bis 45 % des Schaftdurchmessers beträgt.

4. Schraube nach Anspruch 3, dadurch gekennzeichnet, daß die Größe des Versatzes (15) zwischen 10 bis 20 % des Schaftdurchmessers beträgt.

5. Schraube nach einem der Ansprüche 1 bis 4, dadurch gekennzeichnet, daß das am Endstück (18) vorhandene Teilgewinde (24) Teile von drei zum Schaftgewinde fluchtende Gewindegänge (28,30,32) umfaßt.

**6.** Schraube nach Anspruch 5, dadurch gekennzeichnet, daß der am freien Ende des Endstückkes (18) befindliche Teil des ersten Gewindeganges (28) sich umfangsmäßig über 4 bis 20 % der Umfangslänge des Gewindeschaftes (16), der Teil des zweiten Gewindeganges (30) sich umfangsmäßig über 10 bis 40 % der Umfangslänge des Gewindeschaftes (16) und der Teil des dritten Gewindeganges (32) sich umfangsmäßig über 20 bis 70 % der Umfangslänge des Gewindeschaftes (16) erstreckt.

## Claims

**1.** A screw with a head and a shank which has a screwthread and which at its free end has an end portion which reduces towards its free end, with a partial screwthread which extends at its one side only over a portion of the periphery and which is aligned with the screwthread on the shank, characterised in that the end portion (18) of the screwthreaded shank (16), which reduces towards its free end, is of a frustoconical configuration to prevent crossing of the screwthread when it is inserted into a screwthreaded hole in a misaligned fashion, wherein the central axis (B) of the frustoconical end portion (18) and its axis centre point (20) is laterally displaced, in particular in parallel relationship, with respect to the longitudinal centre line (A) of the screwthreaded shank (16).

**2.** A screw according to claim 1 characterised in that the partial screwthread (24) is arranged at the side of the end portion (18) which faces in the direction of the displacement (15).

**3.** A screw according to claim 1 or claim 2 characterised in that the magnitude of the displacement (15) between the central axis (B) of the frustoconical end portion (18) with its axis centre point (20) and the longitudinal centre line (A) of the screwthreaded shank (16) is between 2 and 45% of the shank diameter.

**4.** A screw according to claim 3 characterised in that the magnitude of the displacement (15) is between 10 and 20% of the shank diameter.

**5.** A screw according to one of claims 1 to 4 characterised in that the partial screwthread (24) on the end portion (18) embraces portions of three screwthread flights (28, 30, 32) which are aligned with the shank screwthread.

**6.** A screw according to claim 5 characterised in that the portion, which is at the free end of the end portion (18), of the first screwthread flight (28) extends peripherally over from 4 to 20% of the peripheral length of the screwthreaded shank (16), the portion of the second screwthread flight (30) extends peripherally over from 10 to 40% of the peripheral length of the screwthreaded shank (16) and the portion of the third screwthread flight (32) extends peripherally over from 20 to 70% of the peripheral length of the screwthreaded shank (16).

## Revendications

**1.** Vis comprenant une tête et une tige qui comporte un filetage et qui comprend, à son extrémité, une partie extrême rétrécissant vers son extrémité libre et comportant, sur l'un de ses côtés, un filetage partiel ne s'étendant que sur une partie du pourtour et se trouvant dans l'alignement hélicoïdal du filetage de la tige,
caractérisée en ce que,
en vue d'éviter un coincement des filetages lors d'un vissage mal orienté dans un trou taraudé, la partie extrême (18), rétrécissant vers son extrémité libre, de la tige filetée (16) a une forme tronconique, l'axe (8) de la partie extrême tronconique (18) et son point d'intersection (20) avec la petite base du tronc de cône étant décalés transversalement par rapport à l'axe longitudinal (A) de la tige filetée (16), notamment suivant une disposition parallèle à cet axe longitudinal (A).

**2.** Vis suivant la revendication 1, caractérisée en ce que le filetage partiel (24) est disposé du même côté de la partie extrême (18) que le décalage (15) de l'axe (B) de cette dernière.

**3.** Vis suivant la revendication 1 ou 2, caractérisée en ce que la valeur du décalage (15) existant entre l'axe (B) de la partie extrême tronconique (18) et de son point d'intersection (20) avec la petite base de cette dernière et l'axe longitudinal (A) de la tige filetée (16) est comprise entre 2 et 45 % du diamètre de la tige.

**4.** Vis suivant la revendication 3, caractérisée en ce que la valeur du décalage (15) est comprise entre 10 et 20 % du diamètre de la tige.

**5.** Vis suivant l'une des revendications 1 à 4, caractérisée en ce que le filetage partiel (24) situé sur la partie extrême (18) comprend des portions de trois spires de filetage (28, 30, 32) se trouvant dans l'alignement hélicoïdal du filetage de la tige.

6.  Vis suivant la revendication 5, caractérisée en ce que la portion de la première spire de filetage (28) se trouvant à l'extrémité libre de la partie extrême (18) s'étend, suivant la direction périphérique, sur 4 à 20 % de la longueur de la dimension circonférentielle de la tige filetée (16), la portion de la deuxième spire de filetage (30) s'étend, suivant la direction périphérique, sur 10 à 40 % de cette longueur et la portion de la troisième spire de filetage (32) s'étend, suivant la direction périphérique, sur 20 à 70 % de cette longueur.

FIG. 1

FIG. 2

FIG. 3